# EUROPEAN PATENT APPLICATION

(11) **EP 2 282 124 A1**
(43) Date of publication of application: **09.02.2011**
(21) Application number: 09167070.3
(22) Date of filing: 03.08.2009
(51) Int. Cl.: F23R 3/50, F23R 3/00, F01D 9/02

(54) **Method for retrofitting a combustion chamber of a gas turbine**

(71) Applicant: Alstom Technology Ltd, 5400 Baden (CH)
(72) Inventor: Tschuor, Remigi, 5210, Windisch (CH); Hähnle, Hartmut, 79790, Küssaberg (DE); Benz, Urs, 5073, Gipf-Oberfrick (CH)

(57) **Abstract**

Method for retrofitting a combustion chamber (1) of a gas turbine, the combustion chamber (1) comprising an annular combustor zone (2) arranged to burn an air/fuel mixture (3) to form hot gases, and an annular transition duct (4) arranged to deliver the hot gases to a turbine. The annular combustor zone (2) comprises an outer carrier (6) supporting outer wall segments (7) defining an outer combustion chamber wall (8), and an inner carrier (9) supporting inner wall segments (10) defining an inner combustion chamber wall (11). The annular transition duct (4) comprises an outer wall (13) and an inner wall (14) each made of at least two shells permanently joined together. According to the method, the shells defining the inner and outer annular transition duct walls (13, 14) are removed, thus the combustion chamber (1) is provided with an inner and an outer transition duct carrier (30, 31), and inner and outer wall segments (33, 34) are connected to the inner and outer transition duct carrier (30, 31) to define an inner an outer transition duct wall.

## Description

### TECHNICAL FIELD

The present invention relates to a method for retrofitting a combustion chamber of a gas turbine.

### BACKGROUND OF THE INVENTION

Gas turbines are known to comprise a combustion chamber wherein an air/fuel mixture is combusted to generate hot gases that are expanded in a turbine.

Combustion chambers comprise a first zone or combustor zone wherein combustion takes place, and a second zone or transition duct through which the hot gases generated in the combustor zone are guided towards the turbine.

A number of different configurations for the combustion chamber exist; in particular the present invention refers to the retrofitting of an annular combustion chamber having the combustor zone defined by an outer carrier that supports outer wall segments (they define the outer wall of the combustion chamber combustor zone), and an inner carrier that supports inner wall segments (they define the inner wall of the combustion chamber combustor zone).

The annular transition duct comprises an outer wall and an inner wall that are connected to those inner and outer walls of the combustor zone.

In particular, the inner and the outer transition duct walls are made of two rotationally symmetrical metal shells (a lower shell and an upper shell for each of them) that are permanently joined together by welding.

A combustion chamber having these features is for example described in WO 2009/040286.

During installation, the lower inner and outer shells of the transition duct are arranged into the lower part of the housing of the gas turbine.

After the rotor is installed also the two upper inner and outer shells are installed and joined by welding to the corresponding lower shells.

Nevertheless, as the upper and lower shells defining the annular inner and outer wall of the transition duct are welded together, removal of the rotor is a very complicate operation.

In fact it requires the welded shells to be cut to be separated.

In addition, the welded edges limit the lifetime of the transition duct.

### SUMMARY OF THE INVENTION

The technical aim of the present invention is therefore to provide a method for retrofitting a combustion chamber of a gas turbine by which the said problems of the known art are eliminated.

Within the scope of this technical aim, an aspect of the invention is to provide a method for retrofitting a combustion chamber of a gas turbine that lets machines be realised wherein the rotor removal is easier, time and cost effective.

Another aspect of the invention is to provide a method for retrofitting a combustion chamber of a gas turbine to realise machines that are more reliable and have a significantly increased lifetime.

The technical aim, together with these and further aspects, are attained according to the invention by providing a method for retrofitting a combustion chamber of a gas turbine in accordance with the accompanying claims.

Advantageously, in a combustion chamber retrofitted according to the invention it is possible to replace the hot gas parts (liner segments and heat shields) independently of the cold structural parts (inner and outer carriers).

### BRIEF DESCRIPTION OF THE DRAWINGS

Further characteristics and advantages of the invention will be more apparent from the description of a non-limiting example of an embodiment of the method according to the invention with reference to the accompanying drawings, in which:
Figure 1 is a schematic cross section of a combustion chamber of the prior art;
Figure 2 is a schematic cross section of a combustion chamber after retrofitting according to a first embodiment of the invention;
Figure 3 in a schematic front view of the combustion chamber after retrofitting; and
Figure 4 is a schematic cross section of a combustion chamber after retrofitting according to a second embodiment of the invention.

### DETAILED DESCRIPTION OF THE INVENTION

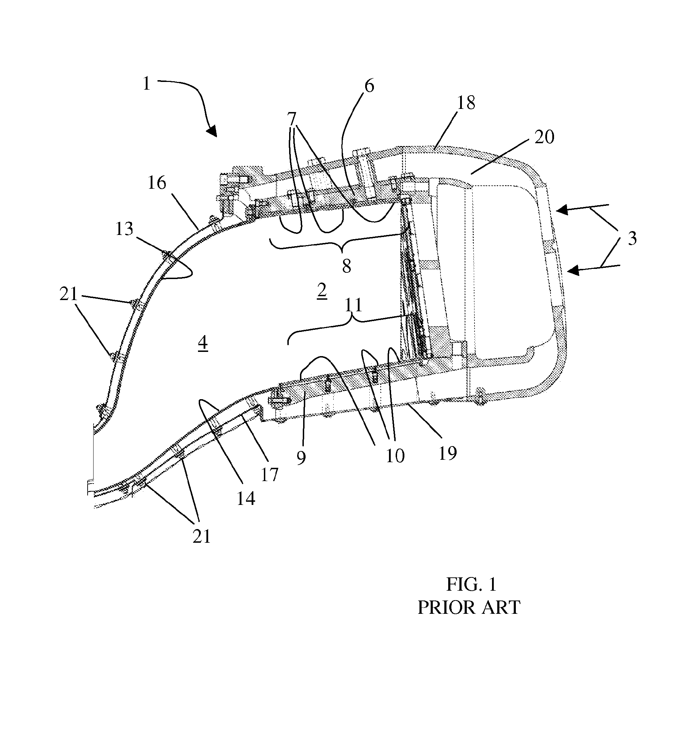

With reference to figure 1 a combustion chamber 1 before retrofitting is shown.

The combustion chamber 1 comprises an annular combustor zone 2 arranged to burn an air/fuel mixture 3 provided by burners (not shown) to form hot gases.

Downstream of the combustor zone 2 (with respect to the hot gases flow) the combustion chamber 1 has an annular transition duct 4 arranged to deliver the hot gases to a turbine provided downstream of the combustion chamber 1 (not shown).

The annular combustor zone 2 comprises an outer carrier 6 supporting outer wall segments 7 that define an outer combustor zone wall 8.

The annular combustor zone 2 also has an inner carrier 9 that supports inner wall segments 10 defining an inner combustor zone wall 11.

The annular transition duct 4 comprises an outer wall 13 and an inner wall 14 each made of two shells permanently joined together by welding.

The shells 13 and 14 are respectively connected to the carrier 6 and 9.

The shells 13, 14 carry at their external side panels 16, 17 connected to a hood 18 and cover sheet 19 that envelope the inner and outer carrier 9, 6 of the combustor zone 2.

The panels 16, 17, the hood 18 and the cover sheet 19 define with the shells 13, 14 and the carriers 6, 9 a cooling interspaces 20 wherein compressed air is guided; the panels 16, 17 are clamped to the shells 13, 14 through clamps 21.

According to the method in an embodiment of the invention, the shells 13, 14 that define the inner and outer transition duct walls (and the panels 16, 17) are removed.

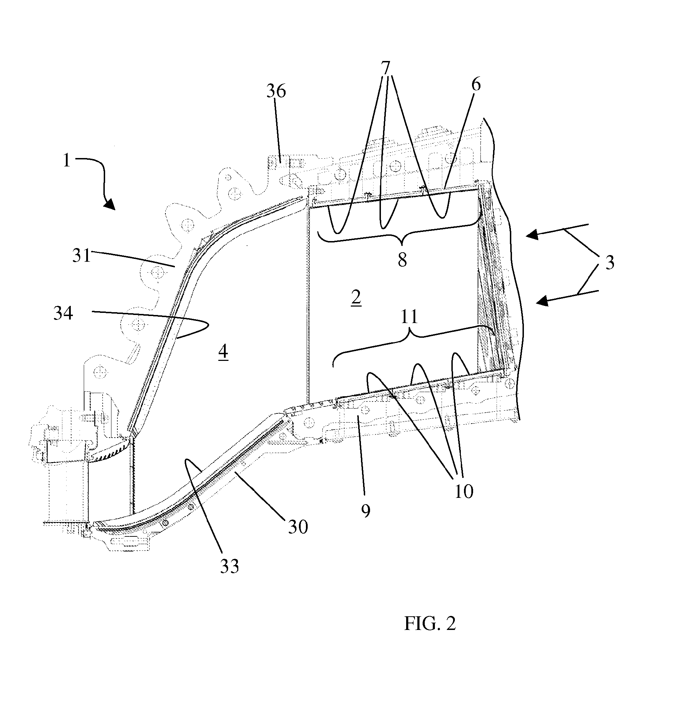

Then the combustion chamber 1 is provided with an inner and an outer transition duct carrier 30, 31 (figure 2).

Thus a plurality of inner and outer wall segments 33, 34 such as hot gases resistant coated tiles are connected to the inner and outer transition duct carrier 30, 31 to define the inner an outer transition duct walls.

In particular the inner and outer carrier 30, 31 of the transition duct 4 are removably connected to the respective inner and outer carrier 9, 6 of the combustor zone 2 by bolting.

In this respect figure 2 shows the bolts 36.

Moreover, also the elements of each inner and outer transition duct carrier 30, 31 are removably joined together by bolting.

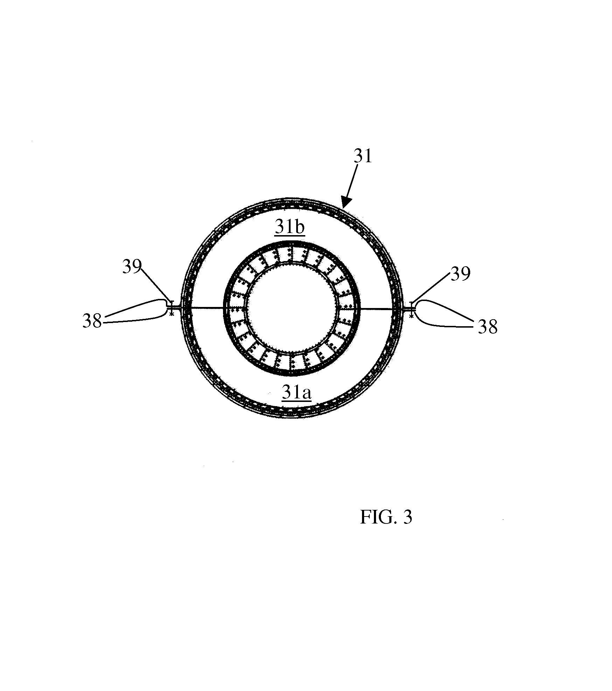

In this respect figure 3 shows the outer transition duct carrier 31 (the inner carrier 30 being inside of the outer carrier 31) made of two elements, a lower element 31a and an upper element 31b that have flanges 38 joined together via bolts 39.

The method according to the first embodiment of the invention lets a combustion chamber made of a segmented combustor zone and a segmented transition duct be realised.

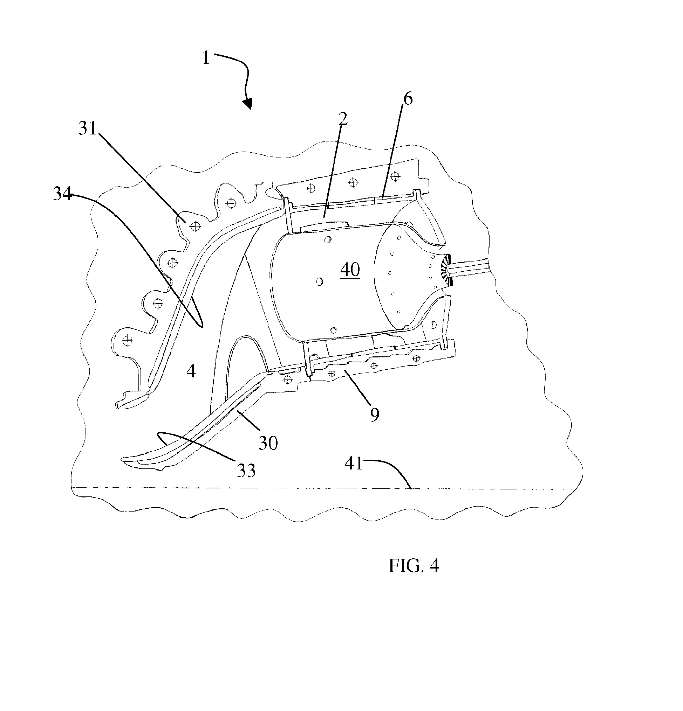

In a different embodiment of the invention (figure 4), in addition to the transition duct carriers 30, 31 and inner and outer segments 33, 34, also a plurality of cans 40 are concentrically disposed around the gas turbine axis 41 inside of the combustor zone 2.

Naturally the features describer may be are independently provided from one another.

The method conceived in this manner is susceptible to numerous modifications and variants, all falling within the scope of the inventive concept; moreover all details can be replaced by technically equivalent elements.

In practice the materials used and the dimensions can be chosen at will according to requirements and to the state of the art.

### REFERENCE NUMBERS

- 1: combustion chamber
- 2: combustor zone
- 3: air/fuel mixture
- 4: transition duct
- 6: outer carrier of 2
- 7: outer wall segments of 2
- 8: outer wall of 2
- 9: inner carrier of 2
- 10: inner wall segments of 2
- 11: inner wall of 2
- 13: outer wall of 4
- 14: inner wall of 4
- 16, 17: panels
- 18: hood
- 19: cover sheet
- 20: cooling interspace
- 21: clamps
- 30: inner transition duct carrier
- 31: outer transition duct carrier
- 31a: lower element of 31
- 31b: upper element of 31
- 33: inner segments of 30
- 34: outer segments of 31
- 36: bolts
- 38: flanges
- 39: bolts
- 40: cans
- 41: gas turbine axis

## Claims

1. Method for retrofitting a combustion chamber (1) of a gas turbine, said combustion chamber (1) comprising an annular combustor zone (2) arranged to burn an air/fuel mixture (3) to form hot gases, and an annular transition duct (4) arranged to deliver the hot gases to a turbine, said annular combustor zone (2) comprising at least an outer carrier (6) supporting outer wall segments (7) defining an outer combustion chamber wall (8), and an inner carrier (9) supporting inner wall segments (10) defining an inner combustion chamber wall (11), said annular transition duct (4) comprising an outer wall (13) and an inner wall (14) each made of at least two shells permanently joined together, **characterised by** removing said shells defining the inner and outer annular transition duct walls (13, 14), providing the combustion chamber (1) with an inner and an outer transition duct carrier (30, 31), and connecting inner and outer wall segments (33, 34) to the inner and outer transition duct carrier (30, 31) to define an inner an outer transition duct wall.

2. Method as claimed in claim 1, **characterised in that** said inner and outer carrier (30, 31) of the transition duct (4) are removably connected to the respective inner and outer carrier (9, 6) of the combustor zone (2).

3. Method as claimed in claim 2, **characterised in that** the inner and outer carrier (30, 31) of the transition duct (4) are removably connected to the inner and outer carrier (9, 6) of the combustor zone (2) by bolting.

4. Method as claimed in claim 1, **characterised in that** the elements of each inner and outer transition duct carrier (30, 31) are removably joined together.

5. Method as claimed in claim 3, **characterised in that** said the elements of each inner and outer transition duct carrier (30, 31) are removably joined together by bolting.

6. Method as claimed in any of the preceding claims, **characterised in that** said wall segments (33, 34) of the transition duct (4) are hot gases resistant coated tiles.

7. Method as claimed in claim 1, **characterised in** by providing said combustion chamber (1) with a plurality of cans (40) concentrically disposed around the gas turbine axis (41) within at least a portion of said annular combustor zone (2).
